# EUROPEAN PATENT SPECIFICATION

(11) **EP 3 475 081 B1**
(45) Date of publication and mention of the grant of the patent: **01.07.2020**
(21) Application number: 17737426.1
(22) Date of filing: 26.06.2017
(51) Int. Cl.: B32B 18/00, C04B 35/532, C04B 38/00, C04B 38/06, B29C 64/153

(54) **METHOD FOR ADDITIVE MANUFACTURING POROUS INORGANIC STRUCTURES**
VERFAHREN ZUR GENERATIVEN FERTIGUNG PORÖSER ANORGANISCHER STRUKTUREN
PROCÉDÉ DE FABRICATION ADDITIVE DE STRUCTURES INORGANIQUES POREUSES

(30) Priority: 28.06.2016 US 201662355604 P
(43) Date of publication of application: 01.05.2019
(73) Proprietor: Dow Global Technologies, LLC, Midland, MI 48674 (US)
(72) Inventor: PYZIK, Aleksander, J., Midland MI 48640 (US); GORIN, Craig, F., Midland MI 48674 (US); GOSS, Janet, M., Midland MI 48674 (US); ALLEN, Sharon, Midland MI 48674 (US); SOPHIEA, Daniel, P., Auburn Hills MI 48326 (US)
(74) Representative: Beck Greener LLP
(86) International application number: PCT/US2017/039255
(87) International publication number: WO 2018/005350

(56) References cited:
- EP-A1- 2 006 266
- WO-A1-2016/061060
- WO-A1-2016/085992

## Description

### Field of the Invention

The invention relates to a method of additive manufacturing of porous inorganic structures bound together by a carbon phase.

### Background of the Invention

Fused filament fabrication (FFF), which is also commonly called plastic jet printing or fused deposition modeling (FDM) has been used to form 3D parts by using thermo-plastic filaments that are drawn into a nozzle, heated, melted and then extruded where the extruded filaments fuse together upon cooling (see, for example, U.S. Patent Nos. 5,121,329 and 5,503,785). Because the technique requires melting of a filament and extrusion, the materials have been limited to thermoplastic polymers (typically nylon) and complex apparatus. In addition, the technique has required support structures that are also extruded when making complex parts that must survive the elevated temperature needed to form the part, while also being easily removed, for example, by dissolving it.

FDM has been used to form ceramics by loading ceramic particulates in the thermoplastic filaments that are extruded such as described by A. Bandyopadhyay et al., in J. Am. Cer. Soc. 80[6] 1366-72 (1997). However, limited use of the technique has been used to fabricate ceramics or metals because of the difficulty in loading ceramics to high levels in the filaments yet still be able to melt and extrude the thermoplastic polymer and because of the difficulty to fabricate greenware (parts after the thermoplastic polymer has been removed) with sufficient strength to be easily manually handled. Other additive manufacturing techniques have been become much more prevalent such as aqueous based extrusion of suspensions of ceramics such as those described in J. Amer. Cer. Soc. 98[7] 198-2001 (2015), but these require particularly suited suspensions and chemistries. Likewise, the other more common method of forming ceramics or metals is powder based 3D printing (P-3DP). Ibid. This tends to require large particles (typically at least about 10 to 20 micrometers in diameter) having sufficient flow to make successive layers of powder that are then bound together via a binder, with the part having to be removed from the bed and subsequently processed. As such, this technique has tended to be used to make molds for casting complex metal parts.

Uniform highly porous structures of ceramics or metals have generally not been manufactured by additive manufacturing techniques due to the inability to handle the part once the binder has been removed (insufficient green strength). Likewise, porous parts of sub-micron parts have also not been made for the same reason and difficulty in creating necessary flow to make layers in a powder bed or sufficient loading in suspensions. Thus, it would be desirable to provide an additive manufacturing method and parts made therefrom that avoid one or more of the problems of the prior art such as those described above. For example, it would be desirable to provide an additive manufacturing method, material for use in such a method and parts that may use sub-micron powders and realize green parts that may be handled manually without breakage.

WO 2016/061060 A1 discloses a method of additive manufacturing comprising (i) providing a material comprised of a prepolymer and filler, (ii) dispensing said material through a nozzle to form an extrudate deposited on a base, (iii) moving the base, nozzle or combination thereof while dispensing the material so that there is horizontal displacement between the base and nozzle in a predetermined pattern to form an initial layer of the material on the base, and (iv) repeating steps (ii) and (iii) to form a successive layer of the material adhered on the initial layer to form an additive manufactured part.

EP 2006266 A1 discloses a porous article comprising at least two layers of inorganic particulates bound together by a carbon binding phase throughout the article: porous ceramic honeycomb elements are joined together by a thermosetting resin which decomposes during heating to form a carbon phase.

### Summary of the Invention

A first aspect of the invention is a method of additive manufacturing a porous inorganic part comprising,
(i) providing a mixture comprising an organic reactive material and inorganic particulates,
(ii) dispensing said mixture through a nozzle to form an extrudate deposited on a base,
(iii) moving the base, nozzle or combination thereof while dispensing the mixture so that there is horizontal displacement between the base and nozzle in a predetermined pattern to form an initial layer of the mixture on the base,
(iv) repeating steps (ii) and (iii) to form a successive layer of the mixture adhered on the initial layer to form an additive manufactured part,
(v) allowing the organic reactive material to react forming a thermoset material that forms carbon upon heating and
(vi) heating the additive manufactured part in an atmosphere to a temperature where the thermoset material decomposes and forms a carbon phase that binds the inorganic particulates to form the porous inorganic part.

The method surprisingly allows for the formation of an additive manufactured part that is highly porous. In addition, the thermoset material fails to flow during the heating to form the carbon (analogous to binder removal) and creates the carbon binder and as such the part that is formed tends to have minimal shrinkage avoiding many defects that may occur in other additive manufacturing techniques such as drying cracks or slumping.

The improved additive manufacturing method may be used to form an inorganic porous additive manufactured that may then be used to form a composite part or reacted to form a porous or densified part such as a porous acicular mullite or titanium carbide, titanium nitride or silicon carbide.

### Brief Description of the Drawings

Fig. 1 is a side view of the additive manufactured article being made by the method of this invention.
Fig. 2 is a scanning electron micrograph of the side of a porous inorganic part showing the retained layer structure resulting from the additive manufacturing method used herein.

### Detailed Description of the Invention

The method additive manufacturing involves the use of a mixture comprised of an organic reactive material and inorganic particulates where the organic reactive material generally reacts under the environment it is dispensed to or with a second component simultaneously mixed and dispensed with it and forms a cross-linked or thermoset matrix or material. Typically, the mixture is dispensed into an air atmosphere at any useful or suitable temperature. Surprisingly, the mixture may be dispensed without any heating and retain its shape sufficiently to form an additive manufactured part. Generally, that means at least a portion or all of the mixture flows under shear at ambient temperature (23° C). The use of the mixture having the organic reactive material and inorganic particulates allows for the dispensing of an extrudate that retains the shape of the nozzle opening that it is extruded through.

The organic reactive material may be any capable of being additive manufactured by extrusion through a nozzle as described below and then cross-linked to form a thermoset material that forms a sufficient amount of carbon upon pyrolyzing in a non-oxidizing atmosphere to bind the inorganic particulates in the mixture. Exemplary organic reactive materials may include any of the known thermosetting monomers, resins or prepolymers such as polyurethanes, polyesters, and silicones available from Dow Corning Corp., Midland, MI, silane modified polymer or prepolymers (e.g., MS POLYMER silyl terminated polyethers available from Kaneka Americas Holding, Inc., Pasadena TX, VORASIL silane terminated polyurethanes available from The Dow Chemical Company, Midland, MI or SPUR+ silane terminated polyurethanes available from Momentive Performance Materials Inc., Waterford, NY), phenol-formaldehyde, melamine, epoxy, or polyimides. Desirably, the organic reactive material is comprised of a prepolymer and in particular a polyurethane prepolymer further described below.

Typically, the amount of carbon formed by the organic reactive material is from 0.1% to 25% of the thermoset material formed from the organic reactive material. Typically, the amount of carbon is at least 0.25%, 0.5 %, 1% or 1.5% to at most 15%, 10%, 5% or 3%. The carbon formed is interposed between the inorganic particles binding them together into a continuous matrix after heating.

The mixture may be provided as one component or multiple components (2 or more). Generally, the mixture is provided as one component or two separate components. When the mixture is provided as one component, the reactive organic material generally reacts in the atmosphere it is dispensed into such as moisture present in air to form the desired additive manufactured part. Illustratively, when the mixture is provided as two components (separately until dispensed), one component contains the reactive organic material that reacts with one or more compounds in the other component and they generally react with each other upon mixing just prior to dispensing to form the desired additive manufactured part. A component when supplied in a mixture having more than one component may have one or more constituents that react with the atmosphere also, but is not required.

Generally, the mixture has a high viscosity at low shear to aid in the retention of the shape after being dispensed. "High viscosity" means that the viscosity of the material or a component making up the material is at least about 10,000, 20,000, or 30,000 centipoise to about 2,000,000 or 1,000,000 centipoise. It is also preferred that if the mixture is provided in more than one component that each of the components has a viscosity that is within about 50% of each other component under the same shear strain rate close to the strain rate expected to be used to dispense the material. "Near" means the strain rate is ±50% of the strain rate typically used to dispense the reactive materials. It is even more preferred if the viscosity is within 40%.

A useful indicative low shear measurement is one in which the viscosity is measured using a Brookfield viscometer using a number 5 spindle at the lowest rpm or using a AR2000 Rheometer available from TA Instruments, New Castle, Delaware with a continuous flow method where a 4 degree cone plate of 20 mm diameter is used at 25 degree C along with 152 micrometer gap and a shear sweep from 1 to 150 s-1. The viscosity in centipoise at low shear is taken at a shear rate of 5 s-1.

Likewise, the mixture desirably has a lower viscosity at higher shear (i.e., is shear thinning) to aid in the ease of dispensing. Generally, it is desirable for the mixture to have a viscosity at 100 s-1 that is at least 2, 3, 5, 10 or even 20 or more times less than at a shear rate of 5 s-1.

In a particular embodiment, it is desirable for the mixture to have a yield stress prior to flowing, which aids in the retention of the cross-sectional shape imparted by the nozzle opening during extrusion through the opening. The yield stress is characterized by measuring G', the storage modulus, using a rheometer. In measuring the yield stress, the mixture is first mixed at high shear such as mixing in a container with paddle blades rotating at 200 rpm for about 1 minute. The mixture is then placed in a rheometer (e.g., AR2000 rheometer from TA Instruments) and an oscillatory stress sweep from 10 to 10,000 Pa at a frequency of 0.1 Hz is performed accordingly. A suitable measuring device geometry is a 25 mm parallel plate having a gap of about 1,000 micrometers. Prior to performing the sweep, a dynamic pre-shear is used to mitigate any residual normal force caused by setting the gap of the parallel plate. A suitable dynamic pre-shear consists of a 0.01 rad displacement at a frequency of 1 Hz for about 1 min.

Generally the yield stress is at least about 20 Pa, 30 Pa, 40 Pa to about 2000 Pa. Likewise, the time to recover the yield stress after being sheared to flow at high shear or the shear experienced upon dispensing is as short as possible. For example, it is desirable that at least about 50% of the yield stress is recovered in fractions of second or at most about 1, 5 or even 10 seconds after being sheared.

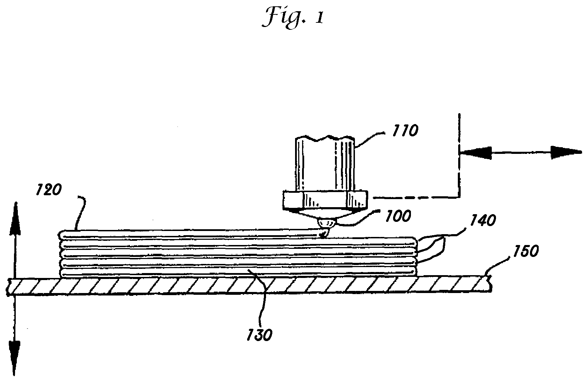

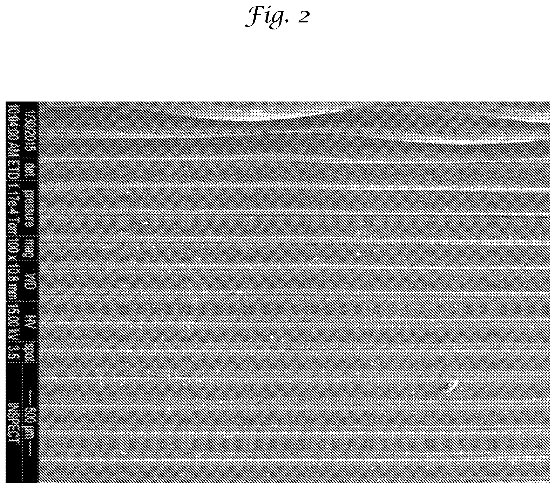

The recovery of a sufficient amount of yield strength or stress may be determined by the mixtures sag performance after being sheared by a pump and applied to a substrate. Sag may be determined by the method described by Pyzik et al., in copending application PCT/US15/055266 on page 5, lines 12 to 23 and Figures 1 and 2.

The desirable rheological properties described above may be realized in the mixture, as an example, by use of a prepolymer as the organic reactive material mixed with inorganic particulates. In an illustrative embodiment, the prepolymer is an isocyanate terminated prepolymer. The amount of isocyanate is present in a sufficient quantity to provide adhesive character between the extrudates during the formation of the additive manufactured part. Such prepolymers also have an average isocyanate functionality sufficient to allow the preparation of a crosslinked polyurethane upon dispensing, but and not so high that the polymers are unstable. "Stability" in this context means that the material prepared from the prepolymer has a shelf life of at least three months at ambient temperature, in that it does not demonstrate an increase in viscosity during such period which prevents its dispensing, application or use. For example, the viscosity should not rise too greatly to make it impractical to dispense. Preferably, the material does not undergo an increase in viscosity of more than about 50 percent during the stated period.

The prepolymer of the mixture desirably has a total NCO content which facilitates acceptable strength in parts prepared after 60 minutes and stability of the prepolymer. Total NCO content includes the NCOs from the isocyanate terminated prepolymer or unreacted isocyanates used to make the prepolymers. Preferably, the NCO content is about 0.6 percent by weight or greater based on the weight of the prepolymer and more preferably about 0.9 percent by weight or greater, and preferably about 4.0 percent by weight or less, more preferably about 3.5 percent by weight or less, even more preferably about 3.0 percent by weight or less, and even more preferably about 2.6 percent by weight or less. Below about 0.6 percent by weight, the prepolymer viscosity may be too high to handle and the working time may be too short even if dispensable.

Preferable polyisocyanates for use in preparing the illustrative prepolymer include those disclosed in U.S. Patent No. 5,922,809 at col. 3, line 32 to column 4, line 24, incorporated herein by reference. Preferably, the polyisocyanate is an aromatic or cycloaliphatic polyisocyanate such as diphenylmethane-4,4'-diisocyanate, isophorone diisocyanate, tetramethylxylene diisocyanate, and is most preferably diphenylmethane-4,4'-diisocyanate. The diols and triols are generically referred to as polyols.

The prepolymers are made from isocyanate reactive compounds, but preferably are made using polyols such as diols and triols such as those described in U.S. Patent No. 5,922,809 at column 4, line 60 to column 5, line 50, incorporated herein by reference. The polyols (diols and triols) are polyether polyols and more preferably polyoxyalkylene oxide polyols. The most preferred triols are ethylene oxide-capped polyols prepared by reacting glycerin with propylene oxide, followed by reacting the product with ethylene oxide.

Preferably, the polyether is chosen to decrease the polarity of the prepolymer. A significant factor in determining the polarity of the prepolymer is the amount of ethylene oxide units in the polyether used to prepare the prepolymer. Preferably, the ethylene oxide content in the prepolymer is about 3 percent by weight or less, more preferably about 1.2 percent by weight or less and most preferably about 0.8 percent by weight or less. As used herein "polarity" refers to the impact of the presence of polar groups in the backbone of the prepolymer. It is also understood that a small amount of other polyols may be used to form the polyether prepolymer such as a polyester polyol such as those known in the art. Typically, such other polyols may be present in an amount of about up to 5% by weight of the polyols used to make said prepolymer. However, said prepolymer may be made in the absence of such polyols.

The mixture is also comprised of inorganic particulates desired to form the porous additive manufactured part and desirably they impart some of the desired rheological properties described above. Illustrative inorganic particulates maybe any inorganic particulate such as a metal, ceramic or carbon. The average particle size of the inorganic particles is generally less than 100 micrometers, 50 micrometers, 20 micrometers, 10 micrometer and may be less than 1 micrometer. In a particular embodiment, essentially all of the particles are less than 1 micrometer (essentially, meaning that there may be some very small amount of particles larger than 1 micrometer, but they generally represent less than 1% by number of the particles), but preferably all the particles are less than one micrometer. The particles may be any metal and alloys of metals, for example, aluminum, copper, titanium, iron or nickel. Likewise, the ceramic particulates may be any useful ceramics particulates desired in the porous additive manufactured article such as oxide, nitrides, carbides, combination of these, or mixture of them. Examples of ceramics include, but are not limited to, silica, alumina, zeolite, calcium oxide, calcium carbonate, talc, titania, zirconia, silicon nitride, clays including, for example, kaolin, surface treated kaolin, calcined kaolin, aluminum silicates and surface treated anhydrous aluminum silicates, and silicon carbide.

The inorganic particles may be in any useful shape such as whiskers, short fibers, platelets, irregular shaped particles, isometric particles or mixture thereof. In an embodiment, the size of the particulates may be small (less than 1 micrometer), but they may have structures where the small particles are bonded together such as illustrated by carbon black or fumed silica, which then may be further bonded by the carbon binding phase formed by the inorganic reactive material after it has reacted to form the thermoset material. In a desired embodiment, the inorganic particulates are comprised of short carbon fibers or carbon whiskers, with the average length being from about 2 to 3 micrometers to about 150, 200, 250 or even 300 micrometers with the length to diameter ratio being at least 3, 5 or 10 to 100.

Depending on their structure and the molecular weight of the prepolymers, the inorganic particulates may be comprised of particles that may range over a wide range of structures as given by oil absorption number (ASTM D-2414-09). For example, the inorganic particulates desirably have an oil absorption number (OAN) of about 80 to 200 ccs per 100 grams, when the Mz of the prepolymer is about 65,000. Preferably, the oil absorption of the filler is at least about 90, more preferably at least about 100, and most preferably at least about 110 to preferably at most about 180, more preferably at most about 165 and most preferably at most about 150 ccs/100 grams.

In addition the inorganic particulates desirably have an iodine number that is at least 80. The iodine number is related to the surface area of the inorganic particulates, but also to the presence of volatile species such as unsaturated oils and, sulfur containing compounds in the case of carbon blacks. The iodine number is determined using ASTM D1510-11.

The amount of inorganic particulates desired may be determined from, for example, the prepolymer molecular weight and by routine experimentation. Typically, the amount of inorganic particulates is at least in ascending desirability, 10%, 15%, 18%, 23 or 25% to at most, in ascending desirability, 80%, 55%, 50%, by weight of the mixture.

When a carbon black is used, it may be a standard carbon black which is not specially treated to render it nonconductive. Standard carbon black is carbon black which is not specifically surface treated or oxidized. Alternatively, one or more nonconductive carbon blacks may be used exclusively or in conjunction with the standard carbon black. Suitable standard carbon blacks include RAVEN™ 790, RAVEN™ 450, RAVEN™ 500, RAVEN™ 430, RAVEN™ 420 and RAVEN™ 410 carbon blacks available from Colombian and CSX carbon blacks such as ELFTEX S5100 and S7100 and MONARCH 120, 570, and 590 available from Cabot, and PRINTEX™ 30 carbon black available from Evonik Industries, Mobile, AL. Suitable non-conductive carbon blacks include RAVEN™ 1040 and RAVEN™ 1060 carbon black available from Colombian Chemicals Company, Marietta, GA.

The mixture may also be comprised of reactive silicon. The reactive silicon may be present as a separate molecule such as a silane. It may be present within the backbone or as a terminal group in the prepolymer described above. The reactive silicon, generally is one that can undergo hydrolysis such as described at column 4, lines 25-55 of U.S. Patent No. 6,613,816. Other illustrative reactive silicons may be found in U.S. Patent Publication 2002/0100550 paragraphs 0055 to 0065 and Hsieh, U.S. Patent No. 6,015,475, column 5, line 27 to column 6, line 41, incorporated herein by reference.

The amount of reactive silicon, when present in the mixture is, generally, about 0.001% to 2% by weight of the total weight of the organic reactive material regardless of whether it is provided in one component or more. The amount of the reactive silicon (note, the weight of the silicon itself and does not include, for example, the organic groups appended thereto), may be at least 0.005%, 0.01%, 0.02%, 0.04%, 0.06%, 0.08% or 0.1% to at most 1.8%, 1.6%, 1.4%, 1.2%, 1%, 0.8%, 0.5% of the material.

The mixture may also be comprised of one or more organic based polymers dispersed therein. Preferably, the organic based polymer is included in the prepolymer by inclusion of a dispersion triol having dispersed therein particles of an organic based polymer. Dispersion triols typically understood to have at least a portion of the particles being grafted with the polyol. The preferable dispersion triols are disclosed in Zhou, U.S. Patent No. 6,709,539 at column 4, line 13 to column 6, line 18, incorporated herein by reference. Preferably, the triol used to disperse the organic particles is a polyether triol and more preferably a polyoxyalkylene based triol. Preferably, such polyoxyalkylene oxide triol comprises a polyoxypropylene chain with a polyoxyethylene end cap. Preferably, the triols used have a molecular weight of about 4,000 or greater, more preferably about 5,000 or greater and most preferably about 6,000 or greater. Preferably, such triol has molecular weight of about 8,000 or less and more preferably about 7,000 or less. It is understood that the polyol of the dispersion polyol (e.g., triol) is included in the polyol to make the prepolymer described herein, where the copolymer particles of the dispersion polyol are understood to be fillers in the composition.

Preferably, the particles dispersed in the dispersion triol comprise a thermoplastic polymer, rubber-modified thermoplastic polymer or a polyurea dispersed in a triol. The polyurea preferably comprises the reaction product of a polyamine and a polyisocyanate. Preferable thermoplastic polymers are those based on monovinylidene aromatic monomers and copolymers of monovinylidene aromatic monomers with conjugated dienes, acrylates, methacrylates, unsaturated nitriles or mixtures thereof. The copolymers can be block or random copolymers. More preferably, the particles dispersed in the triol comprise copolymers of unsaturated nitriles, conjugated dienes and a monovinylidene aromatic monomer, a copolymer of an unsaturated nitrile and a monovinylidene aromatic monomer or a polyurea. Even more preferably, the particles comprise a polyurea or polystyrene-acrylonitrile copolymer with the polystyrene-acrylonitrile copolymers being most preferred. The organic polymer particles dispersed in the triol preferably have a particle size which is large enough to improve one or more properties such as impact properties and elastomeric properties of the finally cured additive manufactured part. The particles may be dispersed in the triol or grafted to the backbone to at least a portion of the triols if not all of them. Preferably, the particle size is about 10 microns or greater and more preferably the particle size is about 20 microns or greater.

The polyols are present in an amount sufficient to react with most of the isocyanate groups of the isocyanates leaving enough isocyanate groups to correspond with the desired free isocyanate content of the prepolymer. Preferably, the polyols are present in an amount of about 30 percent by weight or greater based on the prepolymer, more preferably about 40 percent by weight or greater and most preferably about 55 percent by weight or greater. Preferably, the polyols are present in an amount of about 75 percent by weight or less based on the prepolymer, more preferably about 65 percent by weight or less and most preferably about 60 percent by weight or less.

Generally, the mixture incorporating the illustrative prepolymer illustrating the organic reactive material that forms carbon upon heating typically has a ratio of diols to triols and dispersion triols to achieve the desired cure rate and strength of the thermoset material that forms when manufacturing the porous inorganic article (i.e., prior to decomposing the thermosetting material formed from the organic reactive material). The weight ratio of diol to triol and dispersion triol, if present, is preferably about 0.8 or greater and more preferably about 0.85 or greater and most preferably about 0.9 or greater. The weight ratio of diol to triol and dispersion triol, if present, is preferably about 3.0 or less; more preferably about 2.0 or less and most preferably about 1.75 or less. In the embodiment where the polyols comprise a mixture of diols and triols, the amount of diols present is preferably about 15 percent by weight or greater based on the prepolymer, more preferably about 25 percent by weight or greater and most preferably about 28 percent by weight or greater; and about 40 percent by weight or less based on the prepolymer, more preferably about 35 percent by weight or less and most preferably about 30 percent by weight or less. In the embodiment where the polyols comprise a mixture of diols and triols, the total amount of triols (non-dispersion triol and dispersion triol) present is preferably about 15 percent by weight or greater based on the prepolymer, more preferably about 18 percent by weight or greater and most preferably about 20 percent by weight or greater; and preferably about 45 percent by weight or less based on the prepolymer, more preferably about 35 percent by weight or less and most preferably about 32 percent by weight or less.

The dispersion of organic polymer particles in a triol may be present in the prepolymer in an amount of about 10 percent by weight or greater of the prepolymer and more preferably about 12 percent by weight or greater, and about 18 percent by weight or less of the prepolymer and more preferably about 15 percent by weight or less.

The mixture may further comprise a plasticizer. The plasticizers may be used so as to modify the rheological properties to a desired consistency. Such plasticizers should be free of water and inert to isocyanate groups when using the illustrative prepolymer. The plasticizers may be common plasticizers useful in polyurethane and well known to those skilled in the art and are referred hereinafter as low polar plasticizers. The plasticizer is present in an amount sufficient to disperse the prepolymer of material. The plasticizer can be added to the prepolymer either during preparation of the prepolymer or during compounding of the prepolymer prior to being placed into the first compartment. Preferably, the plasticizer is present in about 1 percent by weight or greater of the prepolymer formulation (prepolymer plus plasticizer), more preferably about 20 percent by weight or greater and most preferably about 30 percent by weight or greater. Preferably, the plasticizer is present in about 45 percent by weight or less of the prepolymer formulation and more preferably about 35 percent by weight or less.

Preferably two plasticizers are used, with one being a high polar plasticizer and one being a low polar plasticizer. A high polar plasticizer is a plasticizer with a polarity greater than the polarity of the aromatic diesters, such as the phthalate esters. A low polar plasticizer is a plasticizer which has a polarity the same as or less than the aromatic diesters.

Suitable high polar plasticizers include one or more of alkyl esters of sulfonic acid, alkyl alkylethers diesters, polyester resins, polyglycol diesters, polymeric polyesters, tricarboxylic esters, dialkylether diesters, dialkylether aromatic esters, aromatic phosphate esters, and aromatic sulfonamides. More preferred high polar plasticizers include aromatic sulfonamides, aromatic phosphate esters, dialkyl ether aromatic esters and alkyl esters of sulfonic acid. Most preferred high polar plasticizers include alkyl esters of sulfonic acid and toluene-sulfamide. Alkyl esters of sulfonic acid include alkylsulphonic phenyl ester available from Lanxess under the trademark MESAMOLL. Aromatic phosphate esters include PHOSFLEX™ 31 L isopropylated triphenyl phosphate ester, DISFLAMOLL™ DPO diphenyl-2-ethyl hexyl phosphate, and DISFLAMOL™ TKP tricresyl phosphate. Dialkylether aromatic esters include BENZOFLE™ 2-45 diethylene glycol dibenzoate. Aromatic sulfonamides include KETJENFLE™ 8 o and p, N-ethyl toluenesulfonamide.

Suitable low polar plasticizers include one or more aromatic diesters, aromatic triesters, aliphatic diesters, epoxidized esters, epoxidized oils, chlorinated hydrocarbons, aromatic oils, alkylether monoesters, naphthenic oils, alkyl monoesters, glyceride oils, parraffinic oils and silicone oils. Preferred low polar plasticizers include alkyl phthalates, such as diisononyl phthalates, dioctylphthalate and dibutylphthalate, partially hydrogenated terpene commercially available as "HB-40", epoxy plasticizers, chloroparaffins, adipic acid esters, castor oil, toluene and alkyl naphthalenes. The most preferred low polar plasticizers are the alkyl phthalates.

The amount of low polar plasticizer in the material is that amount which gives the desired rheological properties. The amounts disclosed herein include those amounts added during preparation of the prepolymer and during compounding of the material. Preferably, low polar plasticizers are used in an amount of about 5 parts by weight or greater based on the weight of material, more preferably about 10 parts by weight or greater, and most preferably about 18 parts by weight or greater. The low polar plasticizer is preferably used in an amount of about 40 parts by weight or less based on the total amount of material, more preferably about 30 parts by weight or less and most preferably about 25 parts by weight or less.

The amount of high polar plasticizer in material is that amount which gives the desired rheological properties and the acceptable sag and string properties of the dispensed reactive materials. Preferably, the high polar plasticizers are used in the material in an amount of about 0.2 parts by weight or greater based on the weight of material, more preferably about 0.5 parts by weight or greater, and most preferably about 1 part by weight or greater. The high polar plasticizer is preferably used in an amount of about 20 parts by weight or less based on the total amount of the material, more preferably about 12 parts by weight or less and most preferably about 8 parts by weight or less.

The prepolymer may be prepared by any suitable method, such as by reacting polyols, such as diols, triols and optionally dispersion triols such as a copolymer polyol or grafted triol, with an excess over stoichiometry of one or more polyisocyanates under reaction conditions sufficient to form a prepolymer having isocyanate functionality and free isocyanate content which meets the criteria discussed above. In a preferable method used to prepare the prepolymer, the polyisocyanates are reacted with one or more diols, one or more triols and, optionally, one or more dispersion triols. Preferable processes for the preparation of the prepolymers are disclosed in U.S. Patent No. 5,922,809 at column 9, lines 4 to 51, incorporated herein by reference. The prepolymers are present in an amount sufficient such that when the resulting dispensed material dispensed and cure, the additive manufactured part is formed by the method. Preferably, the polyurethane prepolymers are present in an amount of about 20 parts by weight of the mixture or greater, more preferably about 30 parts by weight or greater and most preferably about 35 parts by weight or greater. Preferably, the prepolymers are present in an amount of about 60 parts by weight of the material or less, more preferably about 50 parts by weight or less and even more preferably about 45 parts by weight or less.

The mixture may further comprise a polyfunctional isocyanate, for example, to improve the modulus of the composition in the cured form or adhesion of the extrudates to each other. "Polyfunctional" as used in the context of the isocyanates refers to isocyanates having a functionality of 2 or greater. The polyisocyanates can be any monomeric, oligomeric or polymeric isocyanate having a nominal functionality of about 2.5 or greater. More preferably, the polyfunctional isocyanate has a nominal functionality of about 2.7 or greater. Preferably, the polyfunctional isocyanate has a nominal functionality of about 5 or less, even more preferably about 4.5 or less and most preferably about 3.5 or less. The polyfunctional isocyanate can be any isocyanate which is reactive with the isocyanate polyisocyanate prepolymers used in the composition and which improves the modulus of the cured composition. The polyisocyanates can be monomeric; trimeric isocyanurates or biurets of monomeric isocyanates; oligomeric or polymeric, the reaction product of several units of one or more monomeric isocyanates. Examples of preferred polyfunctional isocyanates include trimers of hexamethylene diisocyanate, such as those available from Bayer under the trademark and designation DESMODUR N3300 and N100, and polymeric isocyanates such as polymeric MDI (methylene diphenyl diisocyanates) such as those marketed by The Dow Chemical Company under the trademark of PAPI, including PAPI 20 polymeric isocyanate. The polyfunctional isocyanates, when present are typically present in an amount sufficient to impact the modulus of the cured compositions of the invention or improve the adhesion to certain substrates described above. The polyfunctional isocyanate, when present, is preferably present in an amount of about 0.5 parts by weight or greater based on the weight of the material, more preferably about 1.0 parts by weight or greater and most preferably about 2 parts by weight or greater. The polyfunctional isocyanate is preferably present in an amount of about 8 parts by weight or less, based on the weight of the material, more preferably about 5 parts by weight or less and most preferably about 4 parts by weight or less.

The mixture may also contain a catalyst which catalyzes the reaction of isocyanate moieties with water or an active hydrogen containing compound, which may be in a second component. Such compounds are well known in the art. The catalyst can be any catalyst known to the skilled artisan for the reaction of isocyanate moieties with water or active hydrogen containing compounds. Among preferred catalysts are organotin compounds, metal alkanoates, and tertiary amines. Mixtures of classes of catalysts may be used. A mixture of a tertiary amine and a metal salt is preferred. Even more preferred are tertiary amines, such as dimorpholino diethyl ether, and a metal alkanoate, such as bismuth octoate. Included in the useful catalysts are organotin compounds such as alkyl tin oxides, stannous alkanoates, dialkyl tin carboxylates and tin mercaptides. Stannous alkanoates include stannous octoate. Alkyl tin oxides include dialkyl tin oxides, such as dibutyl tin oxide and its derivatives. The organotin catalyst is preferably a dialkyltin dicarboxylate or a dialkyltin dimercaptide. Dialkyltin dicarboxylates with lower total carbon atoms are preferred as they are more active catalysts in the compositions of the invention. The preferred dialkyl dicarboxylates include 1,1-dimethyltin dilaurate, 1,1-dibutyltin diacetate and 1,1-dimethyl dimaleate. Preferred metal alkanoates include bismuth octoate or bismuth neodecanoate. The organotin or metal alkanoate catalyst is present in an amount of about 60 parts per million or greater based on the weight of the material, and more preferably 120 parts by million or greater. The organotin catalyst is present in an amount of about 1.0 percent or less based on the weight of the material, more preferably 0.5 percent by weight or less and most preferably 0.1 percent by weight or less.

Useful tertiary amine catalysts include dimorpholinodialkyl ether, a di((dialkylmorpholino)alkyl) ether, bis-(2-dimethylaminoethyl)ether, triethylene diamine, pentamethyldiethylene triamine, N,N-dimethylcyclohexylamine, N,N-dimethyl piperazine 4-methoxyethyl morpholine, N-methylmorpholine, N-ethyl morpholine and mixtures thereof. A preferred dimorpholinodialkyl ether is dimorpholinodiethyl ether. A preferred di((dialkylmorpholino)alkyl) ether is (di-(2-(3,5-dimethylmorpholino)ethyl)ether). Tertiary amines are preferably employed in an amount, based on the weight of the material of about 0.01 parts by weight or greater, more preferably about 0.05 parts by weight or greater, even more preferably about 0.1 parts by weight or greater and most preferably about 0.2 parts by weight or greater and about 2.0 parts by weight or less, more preferably about 1.75 parts by weight or less, even more preferably about 1.0 parts by weight or less and most preferably about 0.4 parts by weight or less.

The mixture may further comprise stabilizers, which function to protect the prepolymer from moisture, thereby inhibiting advancement and preventing premature crosslinking of the isocyanates in the material. Stabilizers known to the skilled artisan for moisture curing polyurethane compositions may be used. Included among such stabilizers are diethylmalonate, alkylphenol alkylates, paratoluene sulfonic isocyanates, benzoyl chloride and orthoalkyl formates. Such stabilizers are preferably used in an amount of about 0.1 parts by weight or greater based on the total weight of the material, preferably about 0.5 parts by weight or greater and more preferably about 0.8 parts by weight or greater. Such stabilizers are used in an amount of about 5.0 parts by weight or less based on the weight of the material, more preferably about 2.0 parts by weight or less and most preferably about 1.4 parts by weight or less.

The mixture when it is comprised of a second component may be any that reacts with the organic reactive material of a first component. For example, when the first component is comprised of the illustrative prepolymer, the second component may be comprised of reactive hydrogens such as the polyols described above or water.

In one embodiment, the second component is a paste containing water or a reactive constituent that enhances the cure of the first component of the material. A paste containing water or reactive constituent is present to speed up the cure of the material of the first component (i.e., reacts with the isocyanate groups in the first component). The use of such a paste is particularly useful when making larger parts that need to support more weight upon being formed. Examples of such second components that react with isocyanate prepolymers are described by commonly owned copending U.S. Application No. 61/990136 having an inventor Lirong Zhou and WO/2014/098935, each incorporated herein by reference. In a particular embodiment, the second component is comprised of a polyol having a backbone comprised of an amine group, which is further described in WO/2015/171307.

In another embodiment of a two component system, the material is comprised of an acrylate monomer with a catalyst for forming a polyacrylic or polyacrylate are in two separate components making up the material. Said material undergoes two modes of curing to form the additive manufactured part. Exemplary materials having such 2 components are described by U.S. Publ. No. 2012-0279654 and Int. Pub. Nos. WO/2012/151085 and WO/2012/087490.

The use of a material having 2 components may be desirable, for example, when making larger parts or faster fabrication and use is desired due to the faster increase in the modulus as the material cures. Generally, the modulus is at least 0.1 MPa upon fully curing to any useful modulus, but generally is less than about 50 MPa. Desirably the fully cured modulus is at least about 0.5 MPa or 1 MPa to at most about 25 MPa, 10 MPa, or 5 MPa. The modulus may be determined by the method described by ASTM D4065 measured at 25°C. Desirably, 50% of the final cure is obtained in less than a couple of days at ambient conditions (-23°C and relative humidities of 5% to 95%). Preferably, 50% cure is obtained in less than a day, 12 hours, 3 or 4 hours, 1 hour or even 30 minutes.

Turning to Fig. 1, the method comprises dispensing the mixture through nozzle 100 attached to the nozzle assembly 110 where the mixture may be mixed in-line if it is provided in more than one component. Upon dispensing the mixture forms an extrudate 120 that forms an initial layer 130 and successive layers 140 on base 150. Nozzle assembly 110 is depicted being orthogonal to base, but may be set at any useful angle to form the extrudate whereby the extrudate 120 and nozzle assembly 110 form an obtuse angle with the extrudate 120 being parallel to the base. In addition, the nozzle assembly 110 may be rotated about its longitudinal axis, for example, to reorient the shape of the opening in the nozzle 100, to create extrudates 120 having differing relationship to the base 150.

The relative motion of the base 150 and nozzle assembly 110 are also shown, but it is understood that the base 150, nozzle assembly 110 or both may be moved to cause the relative motion in any horizontal direction or vertical direction. The motion is made in a predetermined manner, which may be accomplished by any known CAD/CAM methodology and apparatus such as those well known in the art and readily available robotics or computerized machine tool interface. Such pattern forming is described, for example, in U.S. Patent No. 5,121,329.

The extrudate 120 may be dispensed continuously or disrupted to form the initial layer 130 and successive layers 140. If disrupted extrudates 120 are desired, the nozzle may be comprised of a valve (not pictured) to shut off the flow of the material. Such valve mechanism may be any suitable such as any known electromechanical valves that can easily be controlled by any CAD/CAM methodology in conjunction with the pattern.

When the mixture is comprised of more than one component, the nozzle assembly 110 may also be comprised of a mixer such as an in-line static or dynamic mixer as well as separate compartments to hold the two components. Examples of two component dispensing apparatus and methods that may be suitable include those described in U.S. Patent Nos. 6,129,244 and 8,313,006 and copending U.S. Appl. No. 61/977668 having an inventor Huide Zhu as well as those described by Sulzer Chemtech, Mixpac Peeler II product Brochure and by Craig Blum, Two Component Adhesive Cartridge Systems, FAST, July 2008.

Because the mixture may be adhesive, the base 150 may be a low surface energy material such as a polyolefin (e.g., polyethylene or polypropylene) or fluorinated polymer such as Teflon and the like. Alternatively, the base may have a mold release agent such as those known in the polyurethane reaction injection molding art or the base may have a sheet of paper or film of a low energy material placed upon it prior to dispensing and forming the additive manufactured part.

More than one nozzle assembly 110 may be employed to make composite or gradient structures within the additive manufactured part. Likewise, a second nozzle assembly 110 may be employed to dispense a support structure that may be later removed so as to allow more complex geometries to be formed such as described in U.S. Patent No. 5,503,785. The support material may be any that adds support and be removed easily such as those known in the art, for example, waxes.

After the additive manufactured part is formed, the organic reactive material is allowed to cross link sufficiently to form a thermoset material that forms carbon upon heating. The amount of time and atmosphere may be any suitable and may be determined by the starting organic reactive material used. For example, when the illustrative isocyanate terminated prepolymer is used the additive manufactured article may be allowed to cure at room temperature (∼23°C) for several minutes or several days in air having typical relative humidities such as from 5% to essentially 100%. Alternatively, the article may be cured by heating. Such heating may be carried out when also heating to decompose the thermoset material, for example, by heating slowly prior to when the thermoset material decomposes or holding at a temperature below where the decomposition of the thermoset material occurs prior to heating to a higher temperature where the thermoset material decomposes.

After the additive manufactured part has been cured sufficiently to form the thermoset material, it is heated in an atmosphere to a decomposition temperature such that the thermoset material decomposes and forms a carbon phase that binds the inorganic particulates together to form the additive manufactured porous inorganic part. The atmosphere may be any one that is sufficiently non-oxidizing to realize the carbon binding phase. Typically, this means that the amount of oxygen in the atmosphere at temperatures where the thermoset material decomposes to form the carbon is at most 100 parts by million (ppm) by weight. Generally, the atmosphere may be any inert gas, nitrogen, reducing gas (e.g., gases containing CO or hydrogen) or mixture thereof. The atmosphere may also be vacuum or a reduced or elevated pressure of the aforementioned gases.

The decomposition temperature may by any suitable depending, for example, on the particular porous inorganic article to be formed and thermoset material used. Generally, the decomposition temperature is at least about 400°C to any practicable temperature. Typically, the decomposition temperature is from at least about 500°C, 600°C, or 700°C to about 1500°C, 1200°C, or 1000°C. The time at temperature may be any suitable such as momentarily or a few seconds to 2 to 3 days, 2 to 3 hours or 30 minutes. The heating may be accomplished by known heating methods such as in resistance heated furnaces in which the atmosphere may be controlled.

The porous inorganic article formed is a porous additive manufactured article comprised of at least two layers of inorganic particulates bound together by a carbon binding phase throughout the additive manufactured article. Generally, the article has a porosity of at least 35%, 40%, 45%, 50%, or even 60% to 80% or 75%. The porosity may be determined by any known techniques such as using Archimedes principle, Hg porosimetry or microscopic techniques. Even though the porous article may be highly porous, it typically has a compressive strength of at least about 0.5 MPa, 1 MPa or 2 MPa and is easily handled manually without breaking. The compressive strength may be determined as described in the Examples.

The inorganic particulates as described above are bound by a carbon binding phase resulting from the decomposition of the thermoset material. Generally, the amount of the carbon binding phase needs to be an amount sufficient to give the porous inorganic article sufficient strength to be handled manually. The amount of carbon binding phase is typically from about 0.1%, 0.5%, or 1% to 10%, 5% or 4% by weight of the porous inorganic article and may vary depending, for example, on the amount or mass (density) of the inorganic particulates themselves, the amount of the inorganic particulates in the mixture and the yield of carbon from the thermoset material. The amount of carbon phase may be determined by known microscopic techniques, for example, when binding inorganic particles such as carbon black described herein. Alternatively, the amount of carbon binding phase may be determined by thermo gravimetric analysis if the inorganic particulates are not subject to weight change during heating in oxygen containing atmospheres or combustion analysis may be used such as available from LECO Corporation, St. Joseph, MI.

In the porous inorganic article, the inorganic particulates form a continuous matrix in which the inorganic particles are bound by the carbon phase. Generally, the carbon binding phase is of a disordered carbon grain boundary phase between the inorganic particulates and generally less than about 200 nanometers thick and may be on the order of only a few nanometers thick (i.e., from surface of one inorganic particle to the surface of adjacent bound inorganic particle's surface). The inorganic particles form a continuous matrix bound by the carbon binding phase in which the porosity is also continuous throughout the porous inorganic article (i.e., essentially no closed porosity other than minute amounts perhaps within the starting inorganic particulates themselves).

The porous inorganic article may then be used to make further composite articles that may be essentially dense or further sintered or reacted to make subsequent porous articles. Illustratively, the inorganic porous article may be infiltrated by a liquid (e.g., metal or organic resin or thermoplastic polymer), by any known infiltration technique such as vacuum or pressure infiltration and the liquid subsequently solidified to form a composite article in which there are two continuous phases within the composite article formed in which inorganic particulates may be enveloped and dispersed in a continuous matrix of the solidified liquid. For example, the porous inorganic article may be comprised of carbon fibers that are infiltrated with an organic resin, monomer, prepolymer, polymer or mixture thereof such as an epoxy resin or phenol-formadehyde resin to form a carbon-thermoset resin composite and in particular a carbon-epoxy composite. When a polymer is used, the polymer may be a thermoplastic polymer such as any known in the art such as an engineering plastic (e.g., polycarbonate, polyamide and polyimide) or polyolefin (e.g., polyethylene, polypropylene or copolymers of these) or thermoplastic polyurethane to name a few.

In another embodiment, the porous inorganic article may be comprised of a ceramic carbide (e.g., titanium carbide or boron carbide) or an oxide bound by the carbon binding phase and optionally contain carbon black, which is then infiltrated with a metal such as titanium or aluminum, which then subsequently reacts with any carbon and or the carbide to form reactive phases resulting in a ceramic metal composite such as an aluminum boron carbide composite or titanium carbide-titanium metal composite.

In another embodiment, the inorganic particulates may be comprised of precursors that upon further heating in differing atmospheres react with each other and form differing phases. For example, the inorganic particulates may be comprised of a metal or metal oxide and carbon black, wherein the metal or oxide may be carburized to form an oxycarbide or carbide or the metal or oxide may be heated under nitrogen to form a nitride, oxynitride, carbonitride, or oxycarbonitride. Another illustration, the inorganic particulates may be comprised of precursors that form mullite (e.g., alumina, talc, clay, silica and fluorotopaz). Upon heating these in a fluorine containing gas fluorotopaz may be formed and then subsequently further heated in the absence of the fluorine to form acicular mullite, which may be used as filter or the like directly or the porous aforementioned bodies may be further infiltrated with a liquid and form a subsequent composite body as described above.

### EXAMPLES

### Prepolymer Formation:

A polyether isocyanate terminated polyurethane prepolymer was prepared as described in Comparative Example 6 of U.S. Pat. No. 8,729,168 and used for all the Examples.

### Example 1

30 grams of the prepolymer and 10 grams of ELFTEX™ S7100 Carbon Black (carbon black filler) (39% volume) available from Cabot Corp. were mixed at 2000 RPM for 2 minutes using a DAC 400 Speed Mixer (FlackTek Inc, Landrum SC) to form a printable mixture. Then, 0.35 g catalyst 2,2'-dimorpholinodiethylether (DMDEE) was added and the formulation mixed for 2 more minutes. The filler had a OAN of about 117 cc/100g and Iodine number of 189 mg/g. The material was then transferred into a plastic bag, and extruded into a 10 cc syringe barrel, plugged with a white Smoothflow piston, and capped with an EFD snap-on endcap, all purchased from Nordson Corporation, Westlake OH.

A high pressure dispensing tool, Nordson HP4X, Nordson Corporation, Westlake OH, was mounted on an UltraTT EFD automated dispensing system, (Nordson Corporation, Westlake OH) which acts as a programmable XYZ stage. The filled syringe was loaded into the dispenser and the material pushed through a 0.41 mm luer lok tapered nozzle (7005009, Nordson Corporation, Westlake OH) extruded as a circular extrudate on Synaps Digital XM Polyester-Coated paper (Nekoosa Coated Products, Nekoosa WI) laying on the XYZ table. The material was extruded at speed of 15 mm/sec using 20 psi air pressure into 35% RH air at ambient temperature -23°C. The XYZ table was controlled by a PalmPilot to form single-walled square tubes with side dimensions of 50 mm. 40 layers of extrudates were printed in the Z-direction with a step height between layers of 0.20 mm. After printing was completed, the part was removed (together with paper substrate) and allowed to cure in the 35% RH air. No delamination between individual layers was observed and adhesion was very good. No buckling of build walls or deformation of individual layers was observed.

After curing (at least 24 hours), the cured additive manufactured part was heated in nitrogen at a heating rate of 0.2°C/min to 900°C, which was held for three hours. The furnace and part were allowed to cool to room temperature by turning off the power of the furnace. After pyrolysis, a porous carbon part (porous inorganic part) was formed that retained the original shape of the cured additive manufactured part. The part was slightly smaller (shrank or sintered) compared to the cured additive manufactured part. The porosity was about 62% and was easily manually handled without breaking. The part had a compressive strength of 0.6 MPa, which was determined as follows. A part was placed between two solid plates in an Instron Universal testing instrument model 542 with a 500 Newton load cell (Instron, Norwood MA). The plates were compressed at a rate of 1 mm/min, and the compressive force at failure was measured and divided by the original cross-sectional area. Fig. 2 is a scanning electron micrograph of the formed inorganic porous part showing the retained layer structure of the cured additive manufactured part. The part had about 2% to 3% by weight of a carbon binding phase.

### Example 2:

Example 1 was repeated except that the printable mixture was comprised of 14% by volume carbon black filler, 30% of copper powder (Product # 41205, Alfa Aesar, Haverhill, MA, 0.5-1.5 µm) with the balance being the prepolymer and catalyst. The printable mixture was printed, cured and pyrolyzed in the same manner as in Example 1. A porous copper, carbon black composite bound by a carbon binding phase was formed, which retained the shape of the cured additive manufactured part. This porous inorganic body was further heated in air to 900°C in air in the same manner as the nitrogen heat treatment of Example 1. A porous copper oxide body was formed.

### Example 3:

Example 2 was repeated except that the printable mixture was comprised of 16.9% by volume carbon black filler, 32.9% of silicon powder (Product # US1121, US Research Nanomaterials, Houston, TX, 1-3 µm with the balance being the prepolymer and catalyst. The printable mixture was printed, cured and pyrolyzed in the same manner as in Example 2. A porous silicon, carbon black composite bound by a carbon binding phase was formed, which retained the shape of the cured additive manufactured part. This porous inorganic body was further heated in air to 900°C in air as in Example 2. A porous silicon dioxide body was formed.

### Example 4:

Example 2 was repeated except that the printable mixture was comprised of 24.4% of titanium dioxide powder (Product # US1017M, US Research Nanomaterials, Houston, TX, Anatase 1.5 µm) and average particle size with the balance being the prepolymer and catalyst. The printable mixture was printed, cured and pyrolyzed in the same manner as in Example 2. A porous titania body bound by a carbon binding phase was formed, which retained the shape of the cured additive manufactured part. This porous inorganic body was further heated in air to 900°C in the same manner as Example 2. A porous titania body was formed.

### Examples 5 (a) and (b):

Example 2 was repeated except that the printable mixture was comprised of 36.6% by volume carbon black filler, 14.9% of titanium dioxide powder with the balance being the prepolymer and catalyst. The printable mixture was printed, cured and pyrolyzed in the same manner as in Example 2. A porous titania, carbon black composite body bound by a carbon binding phase was formed, which retained the shape of the cured additive manufactured part. This part was further heated to 1500°C under nitrogen atmosphere to undergo a carbothermal reduction to form a porous TiN (as determined by X-ray Diffraction) body which retained the shape of the cured additive manufactured part..

Example 2 was repeated except that the printable mixture was comprised of 36.6% by volume carbon black filler, 14.9% of titanium dioxide powder with the balance being the prepolymer and catalyst. The printable mixture was printed, cured and pyrolyzed in the same manner as in Example 2. A porous titania, carbon black composite body bound by a carbon binding phase was formed, which retained the shape of the cured additive manufactured part. This part was further heated to 1500°C under vacuum to undergo a carbothermal reduction to form a porous TiC (as determined by X-ray Diffraction) body which retained the shape of the cured additive manufactured part.

### Example 6:

Example 2 was repeated except that the printable mixture was comprised of 24.2% by volume carbon black filler, 10.1% of tungsten trioxide powder (Product # 11828, Alfa-Aesar, Haverhill, MA, 10-20 µm) with the balance being the prepolymer and catalyst. The printable mixture was printed, cured and pyrolyzed in the same manner as in Example 2. A porous tungsten oxide, carbon black composite body bound by a carbon binding phase was formed, which retained the shape of the cured additive manufactured part.

### Example 7

30g of prepolymer and 10 g of milled carbon fiber (250 µm, CF-MLD250, Asbury Carbon, Asbury, NJ) was added to a vessel and mixed at 2000 RPM for 2 minutes. 3.5 g of ELFTEX™ S7100 Carbon Black (Cabot Corp.) was added and mixed at 2000 RPM for 2 minutes. 0.35 g catalyst 2,2'-dimorpholinodiethylether (DMDEE) was added, and mixed at 2000 RPM for 2 minutes. The mixture was then transferred into a plastic bag, and extruded into a syringe used for 3D printing.

The EFD dispensing system, described in Example 1, was used to print single-walled square tubes with side dimensions of 50 mm. 40 layers of extrudates were printed in the Z-direction with a 0.41 mm nozzle, a step height of 0.3 mm, a speed of 25 mm/sec, and a pressure of 45 psi, which was cured as described in Example 1.

The cured additive manufactured part was then pyrolyzed under a nitrogen atmosphere with a heating rate of 0.2°C per min to 900°C, held for 3 hours, then allowed to cool to form a porous carbon fiber part bound by a carbon binding phase. The formed part retained the as printed shape with a small amount of shrinkage.

A low viscosity, room temperature-cure epoxy was formed by mixing 20 g of 1,4-cyclohexanedimethanol diglycidyl ether (CHDM-DGE, The Dow Chemical Co., 148.5 g/eq) and 3.25 g hardener D.E.H. 24, (triethylenetetraamine, The Dow Chemical Co., 24 g/eq). The porous carbon fiber part was infiltrated using standard vacuum infiltration methods. Excess epoxy was wiped off, and the part was allowed to cure on parchment paper at room temperature overnight. The infiltrated part increased in weight and there was some epoxy that remained on the surface. The parts were fully infiltrated as per the weight gain and observation under a scanning electron microscope.

### Example 8

46 wt% of pre-polymer, 46 wt.% of inorganic filler, 7 wt% of carbon black filler and 1 wt% of catalyst were mixed in the same manner as Example 1, wherein the catalyst used was 2,2'-dimorpholinodiethylether (JEFFCAT DMDEE catalyst available from Huntsman Corp., Woodlands, TX). The inorganic filler was a spray dried mixture of alumina, silica, magnesia and Fe₂O₃ (Ceramiques Techniques et Industrielles s.a., Salindres, France having an average particle size of 14.3 µm (d₅₀). The ratio of alumina to silica was 3 to 1. The amount of magnesia + Fe₂O₃ was 2% of the inorganic filler total weight with the ratio of magnesium to iron being 1:1. Powders were added to a vessel and mixed at 2000 RPM for 2 minutes. 0.35 g catalyst (DMDEE) was added, and mixed at 2000 RPM for 2 minutes. The mixture is then transferred into a plastic bag, and extruded into a syringe used for 3D printing.

The EFD dispensing system, described in Example 1, was used to print single-walled square tubes with side dimensions of 50 mm. 40 layers of extrudates were printed in the Z-direction with a 0.41 mm nozzle, a step height of 0.3 mm, a speed of 25 mm/sec, and a pressure of 85 psi, which was cured as described in Example 1.

The cured part was pyrolyzed in nitrogen as described in Example 7 to form a porous mullite precursor body bound by a carbon phase.

The porous mullite precursor body was then further calcined in air to by heating at a rate of 10°C/minute to 1025°C and then held for 3 hours to form a calcined precursor mullite body. The calcined precursor mullite bodies were converted to porous acicular mullite bodies as follows. The calcined precursor mullite bodies were heated at 2°C/minute to 700°C in a quartz tube while maintaining a reactor pressure of less than 2 mm Hg. As the reactor temperature was maintained at 700°C, silicon tetrafluoride was added slowly over a 4 hour period converting the mullite precursors to fluorotopaz. After the fluorotopaz formation, the residual SiF₄ gas was removed. The reactors were then filled with fresh SiF₄ gas to a target pressure of 400 mmHg and maintained by continuously supplying SiF₄ while the reactor was heated from 700 to 1040°C at 2°C/minute. At 1040°C, the supply of SiF₄ was stopped, and the reactor was continuously heated to 1120°C at 1°C/minute. During this heating from 1040°C to 1120°C, the flurotopaz was converted to mullite releasing SiF₄ gas. This excess SiF₄ gas flowed out of the reactor while maintaining the SiF₄ pressure in the reactor at the target mullitization pressure of 400 mm Hg. The reactor was cooled after there was no further SiF₄ being released. The acicular mullite bodies that were formed had a porosity of 71%, were easily handled by hand and were bound by ceramic bonds as indicated by grain boundary phases as shown in scanning electron micrographs.

## Claims

1. A method of additive manufacturing a porous inorganic part comprising,
(i) providing a mixture comprising an organic reactive material and inorganic particulates,
(ii) dispensing said mixture through a nozzle to form an extrudate deposited on a base,
(iii) moving the base, nozzle or combination thereof while dispensing the mixture so that there is horizontal displacement between the base and nozzle in a predetermined pattern to form an initial layer of the mixture on the base,
(iv) repeating steps (ii) and (iii) to form a successive layer of the mixture adhered on the initial layer to form an additive manufactured part,
(v) allowing the organic reactive material to react forming a thermoset material that forms carbon upon heating and
(vi) heating the additive manufactured part in an atmosphere to a temperature where the thermoset material decomposes and forms a carbon phase that binds the inorganic particulates to form the porous inorganic part.

2. The method of Claim 1, wherein the method further comprises infiltrating a liquid into the porous inorganic part and then solidifying the liquid to form a composite part.

3. The method of Claim 1, wherein the organic reactive material comprises a prepolymer and the prepolymer is an isocyanate terminated prepolymer.

4. The method of Claim 1, wherein the mixture comprises two separate components with a first component comprising the organic reactive material and inorganic particulates and a second component comprising a reactive material that reacts with the organic reactive material of the first component.

5. The method of Claim 4, wherein the first and second components are contacted and mixed prior to dispensing through the nozzle.

6. The method of Claim 5, wherein the first and second components are contacted and mixed in an in-line static mixer, dynamic mixer or combination thereof.

7. The method of Claim 1, wherein the mixture is one component and comprises a prepolymer that cures upon exposure to moisture.

8. The method of Claim 1, wherein the porous inorganic part is subsequently heated under a differing atmosphere used to form the porous inorganic part to further sinter or react the inorganic particulates with themselves, the carbon binding phase and the inorganic particulates or both.

9. The method of Claim 8, wherein the inorganic particulates comprise compounds that form mullite.

## Patentansprüche

1. Ein Verfahren zur additiven Herstellung eines porösen anorganischen Teils, das Folgendes beinhaltet:
(i) Bereitstellen einer Mischung, die ein organisches reaktives Material und anorganische Partikel beinhaltet,
(ii) Abgeben der Mischung durch eine Düse, um ein auf einer Unterlage abgeschiedenes Extrudat zu bilden,
(iii) Bewegen der Unterlage, der Düse oder einer Kombination davon, während die Mischung abgegeben wird, sodass es eine horizontale Verschiebung zwischen der Unterlage und Düse in einem vorbestimmten Muster gibt, um eine Anfangsschicht der Mischung auf der Unterlage zu bilden,
(iv) Wiederholen der Schritte (ii) und (iii), um eine nachfolgende Schicht der Mischung zu bilden, die an der Anfangsschicht haftet, um ein additiv hergestelltes Teil zu bilden,
(v) Ermöglichen, für das organische reaktive Material, unter Bildung eines duroplastischen Materials zu reagieren, das beim Erwärmen Kohlenstoff bildet, und
(vi) Erwärmen des additiv hergestellten Teils in einer Atmosphäre auf eine Temperatur, bei der sich das duroplastische Material zersetzt und eine Kohlenstoffphase bildet, die die anorganischen Partikel bindet, um das poröse anorganische Teil zu bilden.

2. Verfahren gemäß Anspruch 1, wobei das Verfahren ferner das Infiltrieren einer Flüssigkeit in das poröse anorganische Teil und das anschließende Verfestigen der Flüssigkeit beinhaltet, um ein Verbundwerkstoffteil zu bilden.

3. Verfahren gemäß Anspruch 1, wobei das organische reaktive Material ein Prepolymer beinhaltet und das Prepolymer ein isocyanatterminiertes Prepolymer ist.

4. Verfahren gemäß Anspruch 1, wobei die Mischung zwei getrennte Komponenten beinhaltet, wobei eine erste Komponente das organische reaktive Material und anorganische Partikel beinhaltet und eine zweite Komponente ein reaktives Material beinhaltet, das mit dem organischen reaktiven Material der ersten Komponente reagiert.

5. Verfahren gemäß Anspruch 4, wobei die erste und zweite Komponente vor dem Abgeben durch die Düse in Kontakt gebracht und gemischt werden.

6. Verfahren gemäß Anspruch 5, wobei die erste und zweite Komponente in einem statischen Inline-Mischer, dynamischen Mischer oder einer Kombination davon in Kontakt gebracht und gemischt werden.

7. Verfahren gemäß Anspruch 1, wobei die Mischung eine Komponente ist und ein Prepolymer beinhaltet, das bei Aussetzung gegenüber Feuchtigkeit aushärtet.

8. Verfahren gemäß Anspruch 1, wobei das poröse anorganische Teil darauf folgend unter einer anderen Atmosphäre erwärmt wird, die verwendet wird, um das poröse anorganische Teil zu bilden, um die anorganischen Partikel mit sich selbst, der Kohlenstoffbindungsphase und den anorganischen Partikeln oder beiden weiter zu sintern oder umzusetzen.

9. Verfahren gemäß Anspruch 8, wobei die anorganischen Partikel Verbindungen beinhalten, die Mullit bilden.

## Revendications

1. Un procédé de fabrication additive d'une pièce inorganique poreuse comprenant,
(i) le fait de fournir un mélange comprenant un matériau réactif organique et des matières particulaires inorganiques,
(ii) le fait de délivrer ledit mélange à travers une buse afin de former un extrudat déposé sur une base,
(iii) le fait de déplacer la base, la buse ou une combinaison de celles-ci tout en délivrant le mélange de telle sorte qu'il y a un déplacement horizontal entre la base et la buse selon un motif prédéterminé afin de former une couche initiale du mélange sur la base,
(iv) le fait de répéter les étapes (ii) et (iii) afin de former une couche successive du mélange amené à adhérer sur la couche initiale afin de former une pièce fabriquée par addition,
(v) le fait de permettre au matériau réactif organique de réagir en formant un matériau thermodurci qui forme du carbone lors d'un chauffage et
(vi) le fait de chauffer la pièce fabriquée par addition dans une atmosphère jusqu'à une température où le matériau thermodurci se décompose et forme une phase carbonée qui lie les matières particulaires inorganiques afin de former la pièce inorganique poreuse.

2. Le procédé de la revendication 1, le procédé comprenant en outre le fait d'infiltrer un liquide dans la pièce inorganique poreuse, et de solidifier ensuite le liquide afin de former une pièce composite.

3. Le procédé de la revendication 1, dans lequel le matériau réactif organique comprend un prépolymère et le prépolymère est un prépolymère à terminaison isocyanate.

4. Le procédé de la revendication 1, dans lequel le mélange comprend deux constituants distincts, un premier constituant comprenant le matériau réactif organique et des matières particulaires inorganiques et un deuxième constituant comprenant un matériau réactif qui réagit avec le matériau réactif organique du premier constituant.

5. Le procédé de la revendication 4, dans lequel les premier et deuxième constituants sont mis en contact et mélangés avant d'être délivrés à travers la buse.

6. Le procédé de la revendication 5, dans lequel les premier et deuxième constituants sont mis en contact et mélangés dans un mélangeur statique en ligne, un mélangeur dynamique ou une combinaison de ceux-ci.

7. Le procédé de la revendication 1, dans lequel le mélange est un constituant et comprend un prépolymère qui durcit lors de l'exposition à l'humidité.

8. Le procédé de la revendication 1, dans lequel la pièce inorganique poreuse est par la suite chauffée sous une atmosphère qui diffère de celle utilisée pour former la pièce inorganique poreuse afin de fritter ou faire réagir plus avant les matières particulaires inorganiques avec elles-mêmes, la phase de liaison carbonée et les matières particulaires inorganiques ou les deux.

9. Le procédé de la revendication 8, dans lequel les matières particulaires inorganiques comprennent des composés qui forment de la mullite.
